Europäisches Patentamt

European Patent Office

Office européen des brevets

(11) Numéro de publication: **0 256 196**
**A1**

# (12) DEMANDE DE BREVET EUROPEEN

(21) Numéro de dépôt: 86810359.9

(51) Int. Cl.4: **G01N 21/87** , G09F 3/00

(22) Date de dépôt: **13.08.86**

(43) Date de publication de la demande:
24.02.88 Bulletin 88/08

(84) Etats contractants désignés:
AT BE CH DE FR GB IT LI LU NL SE

(71) Demandeur: **ARTIKA INTERNATIONAL (HONG-KONG) LIMITED**
**1101, Dominion Centre 43, Queen's Road East**
**HONG-KONG(HK)**

(72) Inventeur: **Lecaille, Michel André**
**Les Glaieuls 17**
**F-33470 La Hume(FR)**
Inventeur: **Sokolovitch, Claude**
**"Le Beaulieu" Avenue Jules Ferry**
**F-74200 Thonon-Les-Bains(FR)**

(74) Mandataire: **Ardin, Pierre**
**PIERRE ARDIN & CIE 22, rue du Mont-Blanc**
**Case postale 60**
**CH-1211 Genève 1(CH)**

(54) **Procédé permettant l'identification d'un objet détermine et sa reconnaissance ultérieure.**

(57) Pour permettre l'identification ultérieure d'un objet de valeur, on effectue un relèvement micrographique d'au moins une zone de cet objet et on établit une fiche comprenant ce relèvement. Pour procéder à l'identification ultérieure, on effectue un nouveau relèvement de la même zone et dans les mêmes conditions, puis on compare les deux relèvements pour détecter la présence ou l'absence de différences entre eux.

Fig. 1

EP 0 256 196 A1

## PROCEDE PERMETTANT L'IDENTIFICATION D'UN OBJET DETERMINE ET SA RECONNAISSANCE ULTE-RIEURE

Il se produit souvent des vols d'objets de valeur, tels que bijoux modernes et anciens, pièces de monnaie de collection, pièces précieuses, argenterie, décorations anciennes, armes, statuettes, livres rares, tableaux, etc. A la suite des vols, il arrive fréquemment que des copies pratiquement parfaites de l'objet volé soit réalisées, de sorte que si l'on croit retrouver l'objet volé, il est de la plus haute importance de pouvoir s'assurer qu'il s'agit bien de l'original et non d'une copie, si parfaite soit-elle.

L'invention a pour but de permettre de reconnaître s'il s'agit de l'original ou d'une copie de celui-ci.

A cet effet, l'invention concerne un procédé permettant l'identification d'un objet déterminé et sa reconnaissance ultérieure, caractérisé en ce qu'on définit sur cet objet une zone déterminée, en ce qu'on procède à un relèvement micrographique de la surface de cette zone et en ce qu'on constitue une fiche comprenant ce relèvement, ainsi que des observations sur la nature de l'objet et sur son propriétaire, pour permettre en cas de nécessité de procéder à un nouveau relèvement de cette même zone sur ledit objet pour le comparer au fichier et reconnaître s'il s'agit du même objet ou d'une copie.

Le dessin annexé illustre des particularités d'un exemple de mise en oeuvre du procédé objet de l'invention.

La figure 1 montre une partie d'une installation pour la mise en oeuvre de ce procédé.

La figure 2 illustre une portion de la zone observée de l'objet.

La figure 3 montre un relevé obtenu à partir de l'observation de la portion de zone représentée à la figure 2.

Lorsqu'on désire créer une fiche d'identification d'un objet, on procède tout d'abord à une photographie en couleur de cet objet. On définit ensuite une zone déterminée sur cet objet bien délimitée et aisément repérable à l'oeil nu grâce aux diverses particularités, telles que ornementations, couleurs, défauts, chocs, gravures, etc. On a avantage à procéder ensuite à une nouvelle photographie de l'objet plus détaillée que la prédécente et montrant les points de repère de ladite zone.

On applique ensuite sur cette zone une pastille de matière synthétique permettant de mouler toute surface dure avec une précision inférieure au micron. Cette pastille peut avoir une surface comprise entre quelques mm$^2$ et plusieurs cm$^2$. Pendant la prise du moulage, on réalisera un nouveau cliché de l'objet montrant la position exacte de la pastille sur celui-ci.

Lorsque l'empreinte est réalisée, la pastille est détachée, puis posée à plat sur une plaque de verre recouverte d'adhésif double face. On apporte alors sur cette plaque toute les références nécessaires, par exemple nom et adresse du client, désignation de l'objet observé, date de l'opération, etc.

L'empreinte est ensuite expédiée au laboratoire et observée au microscope électronique à des grandissements compris entre 1000 et 100.000 fois. Cette observation a pour but de repérer à une échelle inaccessible à l'oeil nu les marques et caractères spécifiques de l'objet (et notamment de sa surface) qui constituent sa carte d'identité. Plusieurs clichés sont alors réalisés et stockés au laboratoire, ainsi que le moule (qui pourra servir pour des travaux complémentaires ultérieurs éventuels).

Si pour une raison quelconque, il est nécessaire de pouvoir prouver qu'un objet reconnu est bien l'original dont on a créé la fiche d'identité, on procède à une nouvelle opération identique à la première pour former une nouvelle empreinte qui est à nouveau observée au microscope électronique et comparée à l'empreinte initiale.

On peut ainsi vérifier si les traces miniscules, telles que micro rayures, déformations de la surface, variations de la structure ou de la composition, sont identiques sur les deux empreintes tant en position qu'en dimension, profondeur, etc. Si la correspondance est parfaite, on peut en déduire avec certitude que l'objet qui a été examiné en dernier lieu est bien le même que celui pour lequel on avait établit la première fiche d'identité.

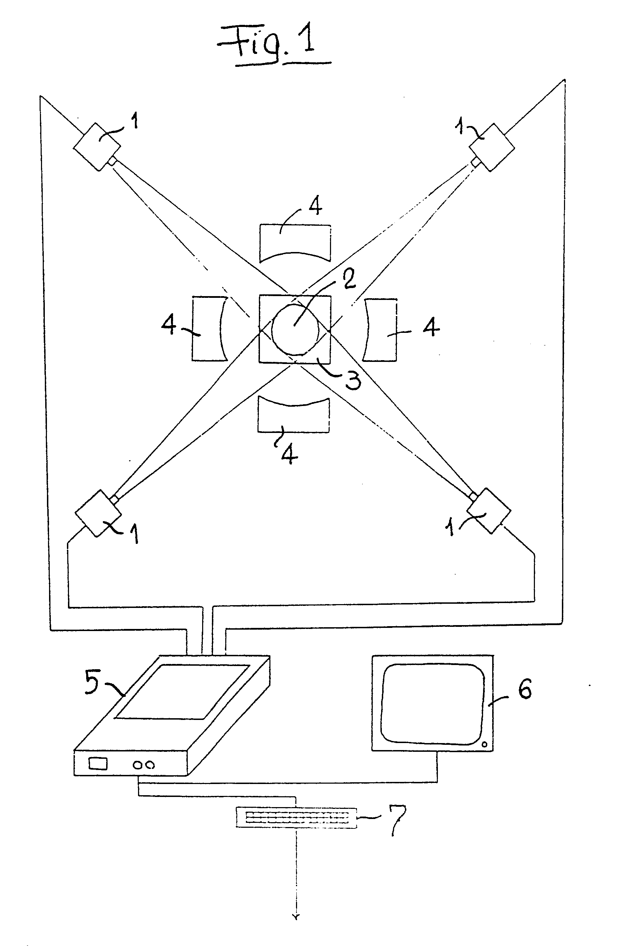

Selon une autre façon de procéder, on peut ne pas faire de moulage au moyen de la pastille, mais on peut simplement photographier une zone déterminée de l'objet, par exemple au moyen de quatre caméras 1, comme représenté à la figure 1. L'objet 2 à controler est posé sur un support 3 et est éclairé par quatre sources lumineuses 4. De préférence, les caméras sont du type à l'état solide étanche. En effet, grâce à la technologie du transfert de charges, cet appareil a une longévité quasiment illimitée, une absence totale de rémanence et une grande robustesse.

Les images fortement grossies obtenus par ces caméras sont appliquées à une unité de traitement 5 qui comprend un disque optique numérique. Un écran catodique 6 permet de controler les images provenant des caméras. L'unité de traitement 5 comporte encore un clavier 7 qui permet l'intervention humaine pour fixer le traitement le plus approprié à l'obtention d'un signal d'identité de l'objet.

Sous l'influence des sources lumineuses, le relief et les ornementations de l'objet observé apparaissent pour l'objectif de la caméra sous forme de taches plus ou moins foncées, présentant une répartition spécifique.

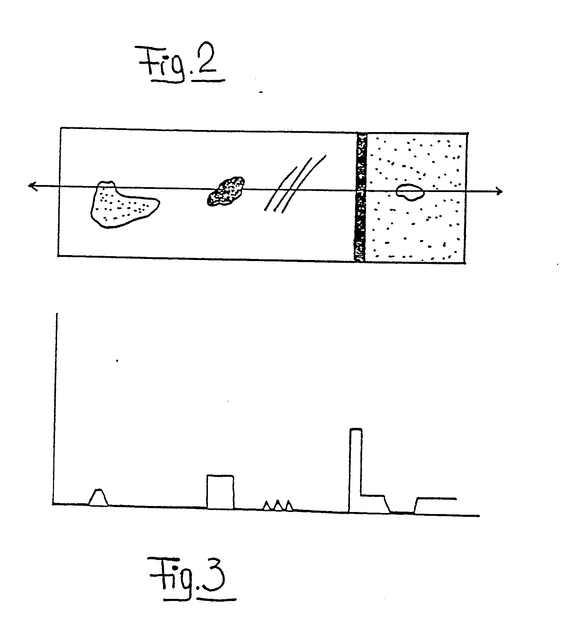

Ces taches sont alors perçues (voir figure 2) comme un relief sur une carte de géographie. Plus la tache est contrastée par rapport au fond, plus le relief a une pente rapide. De petites rayures sont vues comme des accidents de terrain mineurs, alors que les taches sont intégrées comme des reliefs avec des pentes plus ou moins raides suivant le contraste. Une tache noire sur un fond blanc est vue comme une "montagne", alors qu'une tache blanche sur un fond plus foncé est preçue comme un "gouffre".

La "signature" ainsi obtenue pour chaque objet est caractéristique de celui-ci et dépend directement (sous un éclairage constant) de sa morphologie et de ses aspects de surface. Une transformation mathématique de cette "signature" réalisée au moyen de l'unité de traitement permet d'attribuer à chaque objet examiné une valeur "signal" qui est en fait un coefficient qui lui est spécifique.

En variante, on sait que tous les cristaux contiennent des inclusions plus ou moins nombreuses dont la composition et la forme caractérisent l'origine des pierres. Il s'est révélé impossible de trouver deux cristaux présentant des inclusions exactement identiques. Grâce à une méthode de préparation non destructive au microscope photonique, il est possible de photographier de telles inclusions et de donner ainsi une "carte d'identité" des pierres précieuses, montées ou non en bijou.

## Revendications

1. Procédé permettant l'identification d'un objet déterminé et sa reconnaissance ultérieure, caractérisé en ce qu'on définit sur cet objet une zone déterminée, en ce qu'on procède à un relèvement micrographique de la surface de cette zone et en ce qu'on constitue une fiche comprenant ce relèvement, ainsi que des observations sur la nature de l'objet et sur son propriétaire, pour permettre en cas de nécessité de procéder à un nouveau relèvement de cette même zone sur ledit objet pour le comparer au fichier et reconnaître s'il s'agit du même objet ou d'une copie.

2. Procédé selon la revendication 1, caractérisé en ce qu'on applique sur ladite zone une pastille de matière susceptible de prendre une empreinte précise de la surface de cette zone, en ce qu'on éloigne cette pastille et en ce qu'on réalise au moins un cliché de cette pastille à l'aide d'un microscope électronique.

3. Procédé selon la revendication 2, caractérisé en ce qu'on prend au moins une photo de l'objet pendant que la pastille est appliquée sur celui-ci pour permettre de définir ensuite en toute rigeur l'endroit de l'objet où cette pastille a été appliquée.

4. Procédé selon la revendication 1, caractérisé en ce qu'on photographie l'empreinte simultanément au moyen de plusieurs caméras orientées différemment.

5. Procédé selon la revendication 4, caractérisé en ce qu'on procède à un traitement des clichés obtenus, au moyen d'un disque optique-numérique, pour former un signal "signature" caractéristique de la structure superficielle de l'empreinte observée.

6. Procédé selon la revendication 1 pour l'identification d'une pierre précieuse, caractérisé en ce qu'on effectue en outre une analyse des inclusions de cette pierre, cette analyse étant ensuite indiquée sur ladite fiche.

# Fig. 1

Fig.2

Fig.3

## DOCUMENTS CONSIDERES COMME PERTINENTS

| Catégorie | Citation du document avec indication, en cas de besoin. des parties pertinentes | Revendication concernée | CLASSEMENT DE LA DEMANDE (Int. Cl.4) |
|---|---|---|---|
| X | EP-A-0 042 361   (GRETAG)<br>*   Abrégé;   figures;   page   15,   lignes 7-18; revendications * | 1 | G 01 N   21/87<br>G 09 F    3/00 |
| A | | · 4,5,6 | |
| | --- | | |
| A | US-A-4 200 394   (O.H.BARTLETT)<br>* En entier * | 1-3 | |
| | --- | | |
| A | GB-A-1 416 568   (S.S.WILSON) | | |
| | --- | | |
| A | EP-A-0 054 840   (LAZARE KAPLAN) | | |
| | ----- | | |

DOMAINES TECHNIQUES
RECHERCHES (Int. Cl.4)

G 01 N
G 09 F
G 07 D
G 07 C

Le présent rapport de recherche a été établi pour toutes les revendications

| Lieu de la recherche | Date d'achèvement de la recherche | Examinateur |
|---|---|---|
| LA HAYE | 06-05-1987 | DAVID J.Y.H. |

OEB Form 1503 03 82